Europäisches Patentamt

European Patent Office

Office européen des brevets

(19)

(11) Numéro de publication: **0 061 957**
**A1**

## (12) DEMANDE DE BREVET EUROPEEN

(21) Numéro de dépôt: **82400473.3**

(22) Date de dépôt: **15.03.82**

(51) Int. Cl.³: **H 04 Q 3/54**
**H 04 Q 11/04**

(30) Priorité: **31.03.81 FR 8106429**

(43) Date de publication de la demande:
**06.10.82 Bulletin 82/40**

(84) Etats contractants désignés:
**AT BE CH DE GB IT LI LU NL SE**

(71) Demandeur: **THOMSON-CSF TELEPHONE**
**146, Boulevard de Valmy**
**F-92707 Colombes(FR)**

(72) Inventeur: **Athenes, Claude**
**THOMSON-CSF SCPI 173 Bld. Haussmann**
**F-75360 Paris Cedex 08(FR)**

(72) Inventeur: **Tarbouriech, François**
**THOMSON-CSF SCPI 173 Bld. Haussmann**
**F-75360 Paris Cedex 08(FR)**

(72) Inventeur: **Poux, Gérard**
**THOMSON-CSF SCPI 173 Bld. Haussmann**
**F-75360 Paris Cedex 08(FR)**

(74) Mandataire: **Desperrier, Jean-Louis et al,**
**THOMSON-CSF SCPI 173, Bld Haussmann**
**F-75360 Paris Cedex 08(FR)**

(54) **Module de sélection logique.**

(57) L'invention concerne les circuits d'interface entre l'unité centrale et les circuits de sélection d'un autocommutateur électronique temporel.

Elle consiste en un module qui comprend des moyens (801-803) pour sélectionner une unité centrale parmi deux lorsqu'elle appelle, des moyens (806-808) pour connecter l'unité centrale ainsi sélectionnée, des moyens (811, 812) pour décoder l'adresse d'une matrice de sélection parmi huit ainsi que tout autre dispositif possédant des points mémoires tel qu'un module terminal de commutation qui doit recevoir des signaux de marquage, et des moyens (813-820) pour transmettre à la matrice de sélection ainsi sélectionnée les signaux de marquage nécessaires.

Elle permet de démultiplier la liaison entre une telle unité centrale et le réseau de connexion de l'autocommutateur.

./...

Fig.8

# MODULE DE SELECTION LOGIQUE

La présente invention se rapporte aux modules de sélection logique qui permettent à partir de signaux d'informations numériques de sélectionner un circuit parmi un ensemble de circuits semblables et de lui transmettre les informations désirées.

On sait réaliser des autocommutateurs téléphoniques dans lesquels on utilise pour le réseau de connexion proprement dit un seul circuit standard reproduit à un grand nombre d'exemplaires. Ce circuit est connu sous le nom de matrice temporelle symétrique et a été notamment décrit dans la demande de brevet français N° 76 04 345 déposée le 17 février 1976 au nom de la Société THOMSON-CSF. Pour réaliser les chemins spatio-temporels à l'intérieur du réseau de connexion, il faut introduire dans les mémoires d'adresse des matrices temporelles symétriques, plus couramment désignées sous le nom abrégé de MTS, les informations nécessaires à l'établissement des connexions à l'intérieur de cette matrice. La MTS dans sa réalisation actuelle comprend trois bornes d'entrée, une destinée à recevoir un signal de prise qui valide les deux autres, une autre destinée à recevoir un signal série donnant l'adresse de la case mémoire à adresser, et une dernière destinée à recevoir un signal série qui donne l'information à inscrire dans la case ainsi désignée.

Bien qu'une seule MTS permette d'établir 256 chemins spatio-temporels, le réseau de connexion d'un autocommutateur en comprend néanmoins un très grand nombre. Il ne serait donc pas raisonnable de vouloir relier directement chacune de ces MTS à l'unité centrale de l'autocommutateur par trois fils distincts connectés aux bornes définies précédemment. Ceci serait d'autant moins concevable que le taux d'occupation de ces bornes est en fait relativement faible puisqu'elles ne servent qu'à chaque fois qu'il faut établir ou supprimer une communication. Il est donc tout à fait souhaitable d'établir un dispositif logique en pyramide qui à partir de quelques bornes de sortie de l'unité centrale démultiplie celles-ci pour pouvoir les relier à l'ensemble des bornes d'entrée des MTS. On pourrait bien entendu réaliser ce dispositif avec des circuits intégrés de type courant réunis entre eux de manière à donner les fonctions logiques nécessaires. On souhaite toutefois réaliser un tel autocommutateur avec un très petit nombre de circuits distincts réalisés en intégration à grande échelle et dont la MTS est un exemple bien représentatif connu sous la référence commerciale EFX 7331. D'autres circuits ont été réalisés dans ce but et notamment le module terminal de commutation, connu sous la dénomination abrégée MTC et qui permet de réaliser l'interface entre la jonction MIC et la MTS d'entrée du réseau de connexion. Ce MTC est connu commercialement sous la référence EFX 7333. Pour tous ces circuits on s'est efforcé de normaliser les entrées de commande sur la base des trois bornes définies plus haut avec les mêmes signaux à appliquer sur ces bornes. Ainsi la structure des circuits permettant de diriger les signaux de commande depuis l'unité centrale de l'autocommutateur vers les circuits standards de différents types, et notamment les MTS et les MTC, sera la même. Pour aller plus loin dans la standardisation il était alors souhaitable de réaliser un circuit standard utilisé de manière répétitive et sans autre circuit pour réaliser cette interface.

Dans ce but l'invention propose un module de sélection logique destiné à transmettre des signaux aller provenant d'un dispositif amont parmi deux, à un dispositif aval parmi huit, principalement caractérisé en ce qu'il comprend :

- des moyens pour recevoir les signaux d'appel des dispositifs amont, détecter le premier appel, et émettre un signal prêt vers le premier dispositif amont appelant ;

- des moyens pour recevoir les signaux de prise, d'adresse, et de donnée entrant émis par les dispositifs amont, et sélectionner sous la commande du signal prêt les signaux émis par le premier dispositif amont appelant ;

- des moyens pour décoder dans le signal d'adresse l'adresse du dispositif aval devant recevoir les signaux à transmettre, mémoriser cette adresse pendant la durée de la transmission, et émettre vers le dispositif aval ainsi sélectionné un signal de prise sortant ; et

- des moyens pour supprimer dans les signaux d'adresse et de donnée entrant les informations utilisées par le module de sélection logique, et transmettre au dispositif amont sélectionné par le signal de prise sortant le reste des signaux d'adresse et de donnée.

D'autres particularités et avantages de l'invention apparaîtront clairement dans la description suivante présentée à titre d'exemple non limitatif et faite en regard des figures annexées ci-après :

- la figure 1, qui représente un schéma synoptique simplifié d'un module de sélection logique désigné sour le nom abrégé de MSL ;

- la figure 2, qui représente un schéma synoptique de l'organe 101 de la figure 1 ;

- les figures 3 et 4 qui représentent des ordinogrammes du fonctionnement d'un MSL ;

- les figures 5, 6, 9, 10 et 11, qui représentent des séquentiels des signaux d'interface d'un MSL ;

- la figure 7, qui représente un schéma synoptique intermédiaire d'un MSL ;

- la figure 9, qui représente un schéma synoptique détaillé d'un MSL ;

- la figure 11, qui représente un exemple d'utilisation d'un ensemble de MSL ;

- les figures 13 à 23, qui représentent le schéma détaillé d'un MSL.

Un point essentiel de tout autocommutateur téléphonique est que l'unité centrale de commande, en fait un ordinateur spécialisé, est toujours doublée pour assurer la sécurité de fonctionnement de l'autocommutateur. On dispose ainsi de deux unités centrales que nous appellerons par convention A pour l'une et B pour l'autre et qui peuvent fonctionner selon des modalités diverses. Parmi les modes de fonctionnement les plus courants celui appelé partage de charge consiste à faire fonctionner en même temps les ordinateurs et ceci de manière synchrone ou asynchrone selon le cas.

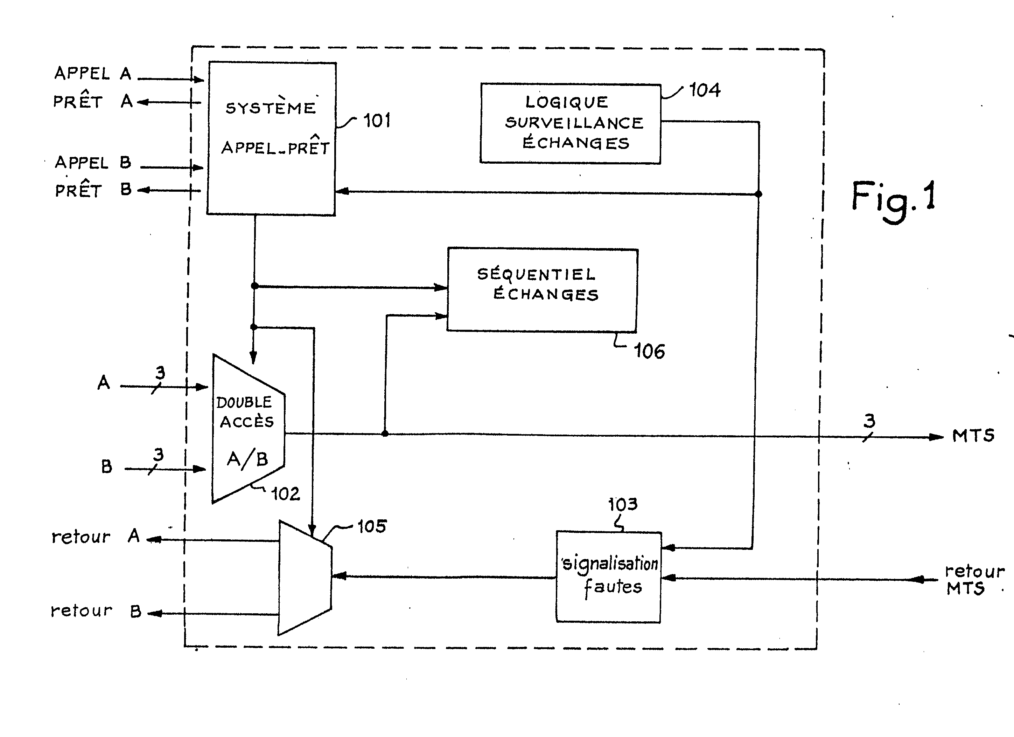

Le synoptique très simplifié du MSL représenté sur la figure 1 permet de définir les liaisons entre les deux unités centrales, le circuit commandé, ici une MTS, et le MSL. Une unité centrale, A par exemple, émet tout d'abord vers le MSL un signal d'appel A. Ce signal est reçu par un système appel-prêt 101 qui vérifie si le MSL est disponible et dans l'affirmative le verrouille sur l'unité centrale A et renvoie à celle-ci un signal prêt A. En même temps il verrouille l'arrivée éventuel d'un signal appel B de l'unité centrale B en inhibant le retour d'un signal prêt B en réponse au signal appel B éventuel.

4

Sur la détection du signal prêt A, l'unité centrale A émet alors vers le MSL un des signaux A sur trois fils qui comprennent donc un signal de prise, un signal d'adresse, et un signal de donnée. Ces signaux sont reçus par un circuit de double accès 102 sur lequel arrivent également les signaux B de la deuxième unité centrale. Ce circuit 102 autorise le passage des signaux A sous la commande du circuit 101.

En sortie du circuit 102 les signaux A sont alors dirigés vers une sortie du MSL vers la MTS à laquelle ils sont destinés.

Cette MTS émet en retour, selon une caractéristique connue, un signal de vérification des informations qui lui ont été transmises. Ce signal en retour de la MTS comprend un certain nombre de clés qui sont codées par le MSL dans un circuit 103 de signalisation de faute du MSL.

Le fonctionnement du MSL est supervisé par un circuit 104 de logique de surveillance des échanges qui libère notamment le circuit 101 au bout d'un temps déterminé afin de ne pas bloquer le MSL si l'une des unités centrales est défaillante. Le signal de libération ainsi appliqué au circuit 101 et qui indique donc une faute de l'unité centrale en prise à ce moment est également appliqué au circuit 103 pour être introduit dans le signal de retour MTS. Le signal de retour ainsi complété est ensuite appliqué à un circuit 105 qui permet de l'émettre vers l'unité centrale appelante A. Cette sélection se fait sous la commande du circuit 101.

Par ailleurs les signaux en provenance du système appel-prêt 101 et du dispositif de double accès 102 sont également appliqués à un circuit séquentiel de commande des échanges dans le MSL.

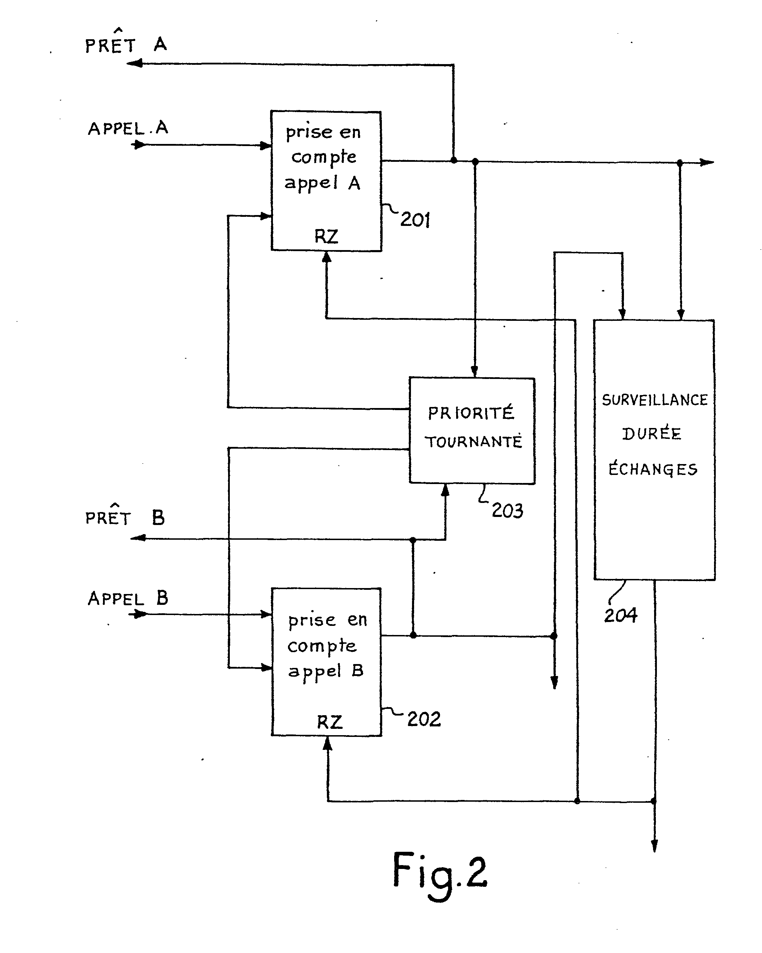

Le circuit 101 et une partie du circuit 104 sont représentés de manière aussi très simplifiée sur le synoptique de la figure 2.

Les signaux appel A et appel B sont appliqués respectivement sur deux circuits de prise en compte d'appel 201 et 202.

En l'absence d'appel, un circuit 203 de priorité tournante valide alternativement les circuits 201 et 202.

Lorsque l'un de ces circuits, 201 par exemple, reçoit en même temps le signal d'appel A et le signal de validation fourni par le circuit 203, il bascule et émet alors le signal prêt A. Ce signal est tout d'abord appliqué à la borne de sortie reliée à l'unité centrale A. Il est par ailleurs appliqué au circuit de priorité tournante 203 ce qui arrête le fonctionnement de ce dernier en le bloquant sur la position où il se trouvait, c'est à dire en validant en permanence le circuit de prise en compte du signal appel A. Le circuit prêt A est enfin envoyé vers les autres circuits du MSL et notamment vers les circuits 102 et 106.

Lorsque appel A retombe, prêt A retombe aussi et le circuit 203 est libéré. Il se remet alors en fonctionnement en redonnant alternativement la main aux circuits 201 et 202.

Les signaux prêt A et prêt B sont enfin appliqués à un circuit 204 de surveillance de la durée des échanges. Si par la suite d'une faute, un blocage de l'unité centrale A par exemple, la durée de prise de celle-ci, déterminée par le temps qui s'écoule entre la montée du signal prêt A et la retombée du signal appel A, dépasse une durée déterminée à l'avance, le circuit 204 interrompt cette prise pour redonner la main à l'autre unité centrale. Pour cela il émet un signal de remise à zéro qui est appliqué aussi bien aux circuits 201 que 202. Sous l'effet de ce signal le circuit bloqué coupe l'émission du signal prêt, ce qui remet en fonctionnement le circuit 203 et fait retomber le signal de remise à zéro fourni par le circuit 204. Le circuit 203 peut alors rendre la main à l'autre circuit de prise en compte de l'appel.

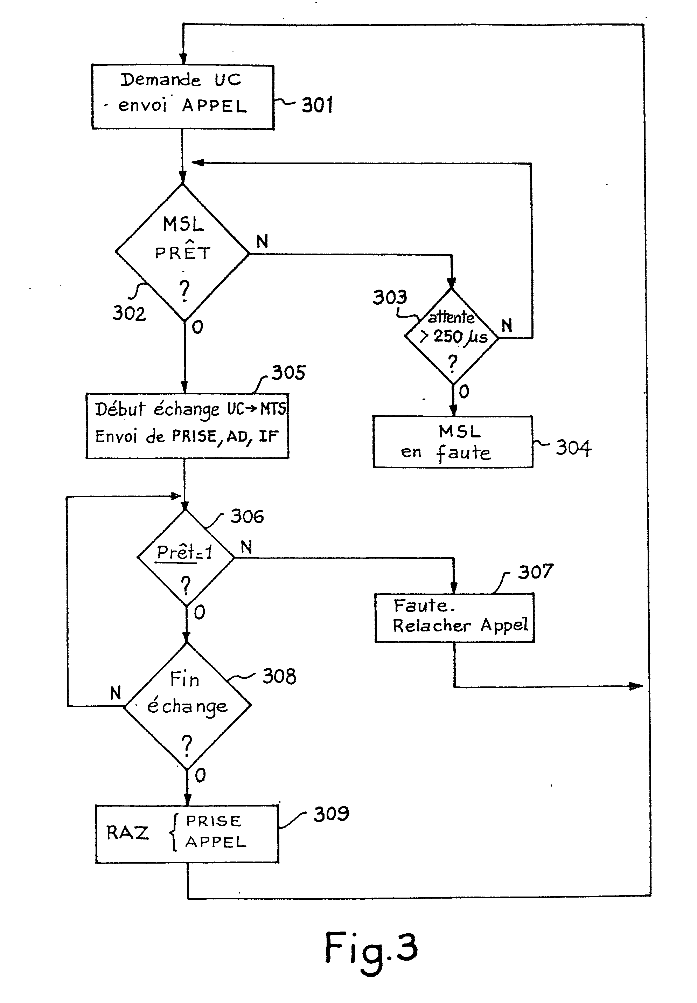

L'organigramme du marquage d'une MTS depuis une unité centrale par l'intermédiaire d'un MSL est représenté sur la figure 3.

L'étape 301 de départ correspond à une demande de l'unité centrale envoyée vers le MSL sous la forme du signal appel.

L'étape 301 est suivie d'une étape 302 de test où l'on vérifie si le MSL est prêt. Dans la négative on passe à une étape 303 où l'on vérifie si la durée qui s'est écoulée depuis l'envoi du signal appel est supérieure à 250 microsecondes. Dans la négative on revient sur l'étape 302.

Lorsque l'attente devient supérieure à 250 microsecondes, on aboutit à une étape 304 où l'unité centrale détecte que le MSL est en faute et prend les mesures appropriées.

Si le MSL n'est pas en faute il répond par un signal prêt avant l'expiration du délai de 250 microsecondes.

On passe alors à l'étape 305 qui correspond au début de la trans-

6

mission des données de l'unité centrale vers la MTS. Ces données correspondent à l'envoi des trois signaux PRISE, adresse AD, et information INFOS.

Pendant que cet échange se déroule, on teste en permanence au cours d'une étape 306, la présence du signal prêt. Si ce signal prêt retombe on passe à une étape 307 qui correspond à une faute en aval de l'unité centrale, qui sur la détection de cette faute relâche l'appel afin de pouvoir passer la main à l'autre unité centrale et recommencer sa demande au cycle suivant.

Le test sur le signal prêt est suivi d'un test sur la fin de l'échange c'est-à-dire la fin de l'envoi des trois signaux vers la MTS. Tant que cet échange n'est pas terminé, on repasse au test 306. Lorsque l'échange est terminé, l'unité centrale fait retomber les signaux prise et appel dans une étape 309 et repart au début de l'organigramme pour l'appel suivant.

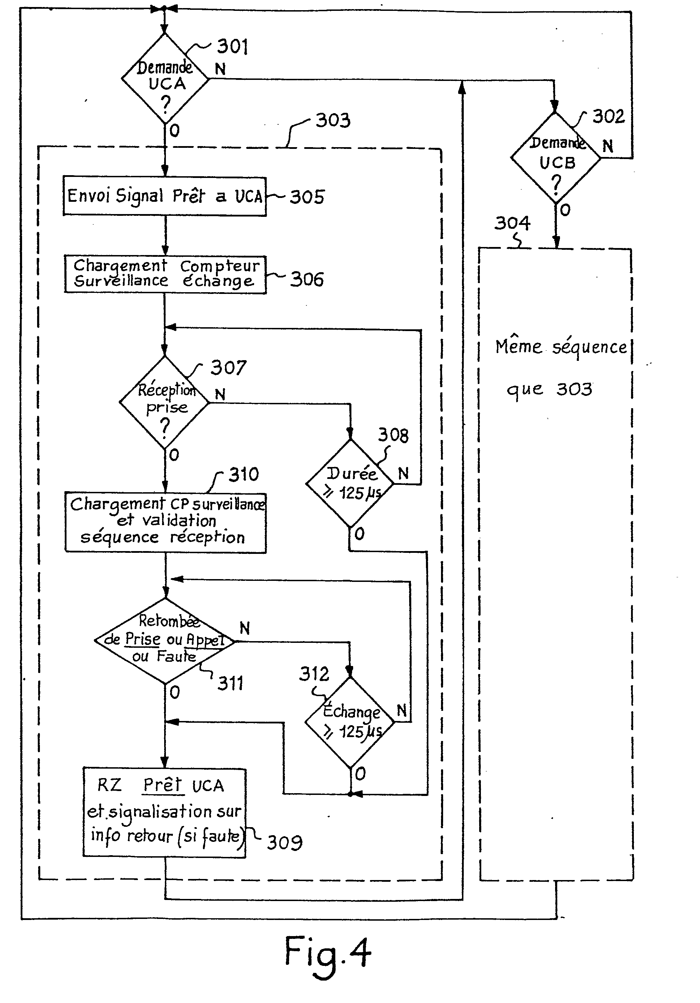

L'alternance en mode asynchrone entre les échanges avec l'unité centrale A et l'unité centrale B est représentée sur l'organigramme de la figure 4.

La première étape 301 est un test sur la demande d'échange par l'unité centrale A. S'il n'y a pas de demande on passe à un test 302 sur la demande d'échange par l'unité centrale B.

S'il y a une demande on passe dans une séquence 303 qui sera décrite plus loin et qui se termine par un retour au test 302.

S'il n'y a pas de demande dans le test 302 on revient au test 301.

S'il y a une demande dans le test 302 on passe à une séquence 304 identique à la séquence 303 et à la fin de laquelle on revient au test 301.

La séquence 303 débute par une étape 305 d'envoi du signal prêt à l'unité centrale A. Cette étape est suivie d'une étape 306 où l'on charge le compteur qui surveille la durée des échanges. Cette étape 306 est suivie d'un test 307 sur la réception du signal prise de l'unité centrale. Si ce signal n'est pas reçu on passe à un test 308 sur le contenu du compteur de surveillance, c'est-à-dire sur la durée qui s'est écoulée depuis son chargement. Si cette durée est inférieure à la durée d'attente prescrite de 125 microsecondes, on repart au test 307.

Lorsque la durée finit par excéder cette durée prescrite, on passe du test 308 à une étape 309 où l'on remet à zéro le signal prêt envoyé à l'unité centrale A.

Si avant l'écoulement de cette durée prescrite on reçoit bien le signal prise, on passe à une étape 310 où l'on charge de nouveau le compteur de surveillance et où l'on valide les organes qui déterminent le séquencement de la réception et de la transmission des signaux qui doivent traverser le MSL.

Cette étape 310 est suivie d'un test 311 sur la retombée des signaux prise ou appel et sur une faute quelconque, de parité par exemple, dans la transmission des signaux. Si aucun de ces événements ne s'est produit, on passe à un test 312 sur le contenu du compteur de surveillance qui teste si la durée depuis son chargement est supérieure ou inférieure à la durée prescrite de 125 microsecondes.

Tant que cette durée est inférieure, on se reboucle sur le test 311, et lorsqu'elle devient supérieure à 125 microsecondes, on passe à l'étape 309.

Lorsque l'on a une retombée du signal prise ou appel, ou une faute de parité, on passe aussi à l'étape 309.

La sortie de l'étape 309 correspond à la sortie de la séquence 303.

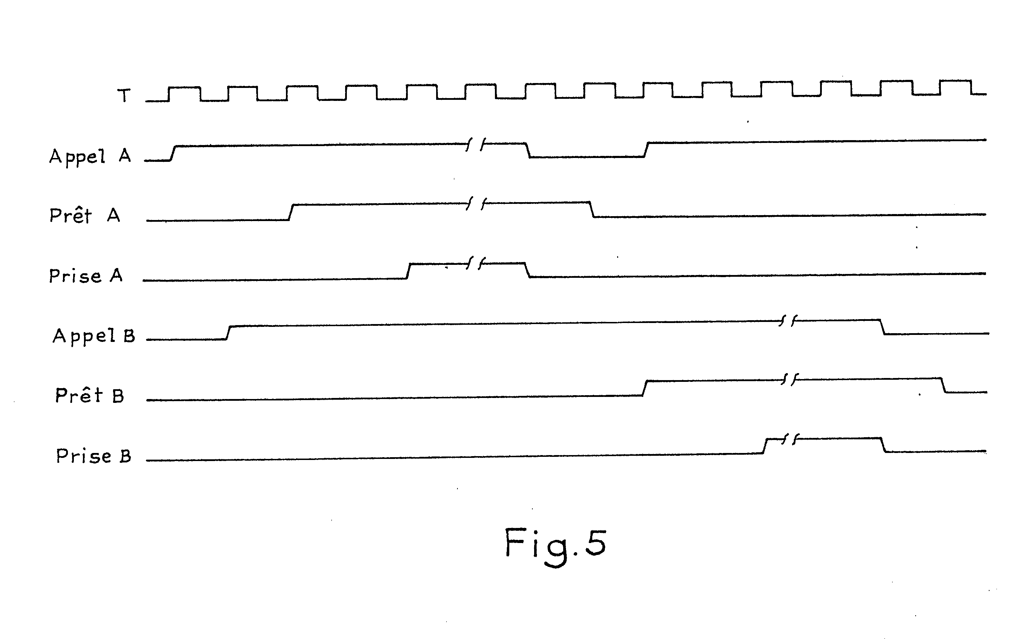

La séquence des signaux dans le cas d'un appel de l'unité centrale A suivie d'un appel de l'unité centrale B est représentée sur la figure 5.

Sur la ligne T on a les signaux d'horloge qui déterminent le séquencement de tout le circuit.

Le signal appel A monte sur le front ascendant d'un premier signal d'horloge.

Le signal appel B transmis par l'unité centrale B monte sur le front ascendant du signal d'horloge suivant.

Le MSL répond par la montée au deuxième signal d'horloge suivant du signal prêt A ce qui est normal puisque c'est l'unité centrale A qui a appelé la première.

Cette dernière réplique par la montée du signal prise A au quatrième signal d'horloge suivant celui correspondant à appel A.

En réponse à la retombée ultérieure d'appel A et de prise A, le MSL fait retomber le signal prêt A avec un retard d'une durée d'horloge et fait

8

monter le signal prêt B avec un retard d'une durée d'horloge sur la retombée de prêt A, puisque appel B est toujours présent.

L'échange avec l'unité centrale B se produit alors dans les mêmes conditions que celles avec l'unité centrale A.

Le fonctionnement en mode synchrone n'est nullement lié à une particularité du MSL, mais au contraire au mode de fonctionnement des deux unités centrales A et B.

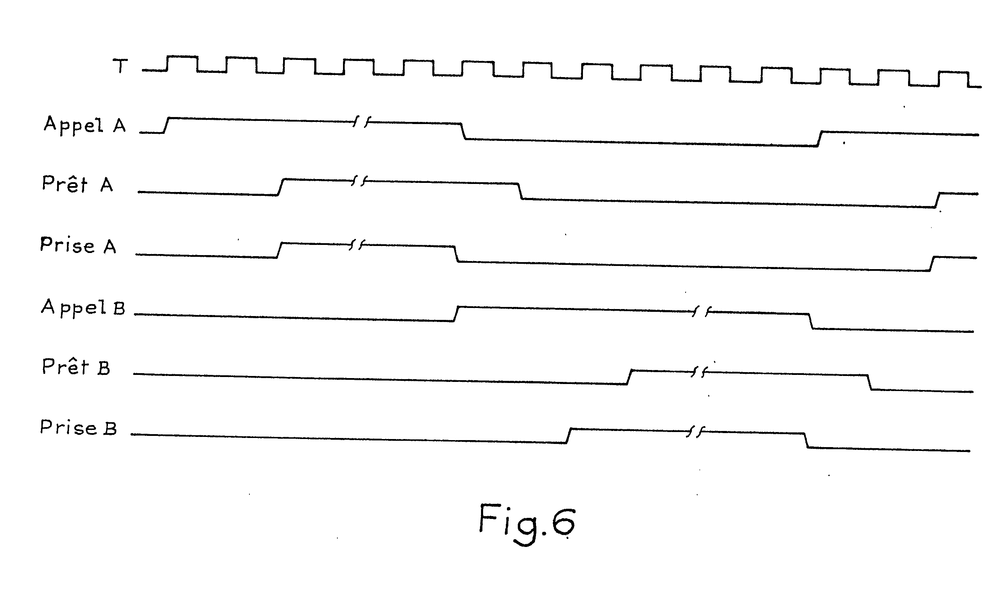

En effet ces unités centrales savent dans ce mode qu'elles travaillent en synchronisme et envoient leurs signaux alternativement de manière à ne pas empiéter de l'une sur l'autre. L'échange correspondant successivement à A puis B est représenté sur la figure 6 de la même manière que sur la figure 5.

Il débute là aussi à un instant de l'horloge T par la montée du signal appel A. Mais à la différence du mode asynchrone, il se poursuit au bout de deux intervalles de l'horloge par la montée simultanée des signaux prêt A et prise A. En fait le signal prise A a été émis sans attendre la réception du signal prêt A car l'unité centrale A sait qu'elle est seule à émettre à son tour.

A la fin de l'échange les signaux appel A et prise A retombent, suivis au bout d'un intervalle de temps de l'horloge de la retombée du signal prêt A.

A ce même moment où appel A et prise A retombent, le signal appel B monte, ce qui est l'une des caractéristiques du fonctionnement en mode synchrone puisque l'unité centrale B a envoyé son appel en sachant par son programme interne que l'appel de A retombait à ce même moment. Cet envoi des signaux d'appel n'est d'ailleurs nécessaire dans ce mode que pour faire fonctionner le MSL et non pas pour faire se succéder les échanges avec les deux unités centrales par un système d'appel-réponse.

Au bout des deux intervalles de temps de l'horloge nécessaires, le signal de prise B monte indépendamment de l'arrivée du signal prêt B qui n'a lieu qu'un intervalle de temps après. Ceci est une autre caractéristique du fonctionnement du mode synchrone. Les échanges s'effectuent alors jusqu'à ce qu'ils soient terminés avec l'unité centrale B et que les signaux appel B et prise B retombent simultanément.

9

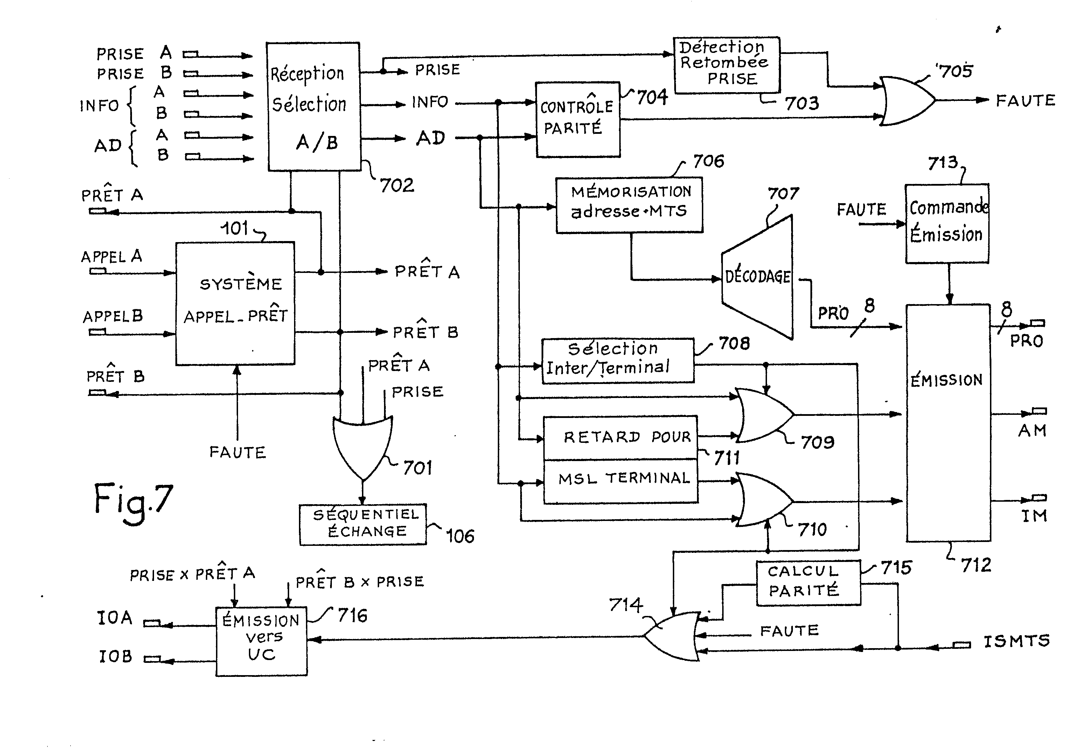

Le synoptique de la figure 7 est plus complet que celui de la figure 1 et permet de présenter de manière plus approfondie l'échange des informations entre l'unité centrale d'un côté et la MTS de l'autre.

Les signaux appel A et appel B sont appliqués à un système d'appel prêt 101 qui délivre les signaux prêt A ou prêt B comme on l'a vu plus haut.

De même ces signaux prêt A et prêt B sont appliqués par l'intermédiaire d'une porte "OU" 701 à un séquentiel d'échange 106 qui gère le fonctionnement des autres circuits.

Ils sont aussi appliqués sur deux bornes de sortie faisant partie de l'interface du MSL, et sur un circuit de réception/sélection 702.

Sur ce circuit de réception/sélection sont connectées les bornes d'entrée du MSL sur lesquelles arrivent respectivement les signaux prise A, prise B, info A, info B, adresse A (ADA), et adresse B (ADB). Ce circuit de réception/sélection permet, sous la commande des signaux prêt A ou prêt B, de laisser passer ceux des signaux prise, info, et adresse correspondant à celles des unités centrales A ou B qui a été sélectionnée à partir de son appel auquel le MSL a répondu par prêt.

Le signal de prise ainsi sélectionné est surveillé par un circuit 703 de détection de retombée PRISE qui permet de surveiller la validité des informations reçues de l'unité centrale. Si ce signal retombe le circuit 703 émet un signal de faute.

Les signaux d'information et d'adresse sélectionnés par le circuit 702 sont eux-mêmes contrôlés dans un circuit 704 qui surveille la parité du signal. En cas de faute de parité un autre signal de faute est émis.

Les signaux de faute émis par les circuits 703 et 704 sont rassemblés par un circuit "OU" 705 qui délivre un signal de faute composé de l'un ou l'autre de ces deux signaux.

Le signal de prise est également appliqué sur la porte "OU" 701 par l'intermédiaire de laquelle il vient actionner le séquentiel d'échange 106.

Le signal d'adresse est appliqué dans un circuit de mémorisation 706 où l'on trouve donc l'adresse du MTS qui doit être sélectionné par le MSL.

Cette adresse est décodée dans un décodeur 707 qui délivre un signal de prise du MTS PRO sur un fil parmi huit sélectionné à partir de ladite adresse.

Le début du signal d'information est tout d'abord analysé dans un circuit 708 qui permet de voir si le MSL qui reçoit les signaux de l'unité centrale est en position intermédiaire ou terminale comme on le verra plus loin.

Le signal résultant de cette analyse est appliqué à deux circuits de sélection 709 et 710 qui reçoivent respectivement les signaux d'information et d'adresse et les transmettent directement dans le cas où le MSL est en position intermédiaire.

Ces circuits 709 et 710 reçoivent également les signaux d'information et d'adresse par l'intermédiaire d'un dispositif de retard 711 qui est utilisé pour les retarder d'une durée déterminée lorsque le MSL est en position terminale, c'est-à-dire lorsque ces signaux de sortie attaquent directement une MTS.

Les signaux de prise en sortie du dispositif de décolage 707, et les signaux d'information et d'adresse en sortie des circuits de sélection 709 et 710 sont tous appliqués sur un circuit d'émission 712 qui permet de les émettre sur les bornes de connexion adéquates de sortie du MSL. Ces bornes comprennent donc huit bornes de prise PRO, une borne d'adresse AM et une borne d'information IM.

La commande de l'émission se fait sous l'action d'un circuit 713 commandé par le séquentiel d'échange 106. Ce circuit 713 reçoit également le signal de faute qui bloque l'émission dans le cas où l'on repère une faute définie plus haut.

Les signaux IS MTS en provenance de la MTS sont appliqués sur un circuit "OU" commandé 714. Celui-ci reçoit également le signal de faute et un signal de parité calculé à partir du signal de retour du MTS par un circuit 715.

Le signal de retour ainsi constitué par l'addition de ces trois signaux distincts est appliqué à un circuit 716 d'émission vers l'unité centrale qui alimente les deux bornes de sortie des signaux IOA et IOB dirigés vers les unités centrales correspondantes. Ce circuit permet d'émettre le signal de retour vers l'unité centrale appelante. Le circuit 716 reçoit également deux signaux d'autorisation d'émission obtenus par des circuits non représentés mais classiques et qui fonctionnent à partir des signaux de prise et de prêt A et prêt B.

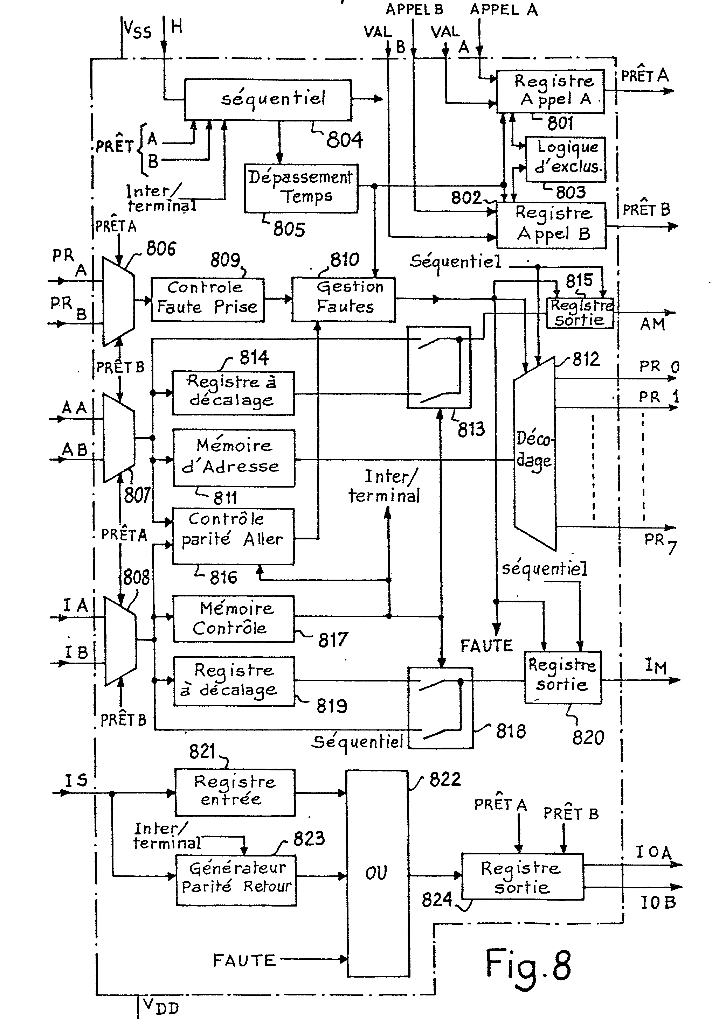

Le schéma synoptique complet du MSL tel qu'intégré dans un circuit d'intégration à grande échelle est représenté sur la figure 8 avec toutes les connexions extérieures de ce circuit et les blocs fonctionnels qu'il contient.

Ce synoptique sera décrit avec les séquentiels des différents signaux qui ont déjà été décrits sur les figures 5 et 6 et qui vont l'être sur les figures suivantes qui seront appelées au fur et à mesure des besoins.

On citera pour mémoire les deux bornes d'entrée VSS et VDD qui permettent d'appliquer au circuit la tension d'alimentation.

Les signaux appel A et appel B arrivent respectivement sur deux registres d'appel 801 et 802. Comme le boîtier standard dans lequel a été implanté le MSL comporte normalement vingt-huit broches, on a utilisé deux broches qui restaient libres pour pouvoir appliquer sur les registres 801 et 802 des signaux de validation VALA et VALB. Ainsi les signaux d'appel ne seront pris en compte que si sur un même registre le signal d'appel et le signal de validation montent ensemble. Ceci permet l'usage éventuel des MSL dans un montage matriciel qui étend leurs possibilités d'utilisation.

Chaque registre d'appel mémorise donc l'appel validé pour la durée de la séquence de transfert et délivre au bout des deux et trois durées d'horloge, définies en figures 5 et 6, les signaux prêt A et prêt B.

Un circuit 803 contient une logique d'exclusion qui permet lorsqu'un appel est reçu sur l'un des registres de bloquer l'arrivée de l'autre dans le fonctionnement en mode asynchrone. Un système simple pour obtenir cette logique d'exclusion consiste à faire fonctionner l'un des registres sur le signal barre de l'autre. Ainsi quand l'un des registres pourra recevoir l'appel, l'autre ne le pourra pas, et donc celui en état de recevoir l'appel bloquera automatiquement l'autre même s'il avait reçu un appel simultané.

Le signal prêt qui est alors émis initialise un circuit séquentiel 804 qui est en fait tout simplement un compteur fonctionnant à partir du signal d'horloge H arrivant sur une borne du circuit. Ce signal d'horloge peut être le signal d'horloge général à 2 MHz utilisé dans les circuits MIC et qui est l'horloge générale d'un autocommutateur à commutation temporelle. Une fréquence différente, 64 kHz par exemple, peut être utilisée pour H.

Les états de ce compteur sont décodés de manière à délivrer les différents temps nécessaires à l'intérieur du MSL. L'un de ces temps correspond à la durée de 125 microsecondes dont on a vu qu'elle constituait une limite de durée de fonctionnement du MSL à partir de laquelle celui-ci basculait automatiquement sur l'autre unité centrale. Le dépassement de ce temps est contrôlé dans un circuit 805 qui délivre le cas échéant un signal qui remet à zéro les deux registres d'appel 801 et 802.

L'unité centrale appelante peut alors émettre les trois signaux de prise PRA (PRB), d'adresse AA (AB), et d'information IA (IB). Les trois signaux de chacune des unités centrales arrivent respectivement sur les bornes d'entrée correspondantes.

Des circuits de sélection 806 à 808 permettent, sous la commande des signaux prêt A ou prêt B, de sélectionner chacune des bornes de prise, d'adresse, et de donnée correspondant à l'unité centrale autorisée à émettre. Ces circuits jouent simplement le rôle de commutateurs électroniques.

Le signal de prise ainsi sélectionné est appliqué sur un circuit 809 de contrôle de faute de prise qui surveille simplement la retombée inopinée de ce signal pendant la durée des échanges, ce qui correspond à une faute. Si ce signal vient à retomber, le circuit 809 émet alors un signal de faute vers un circuit 810 de gestion de fautes qui rassemble les différentes fautes pouvant se produirent pendant les échanges.

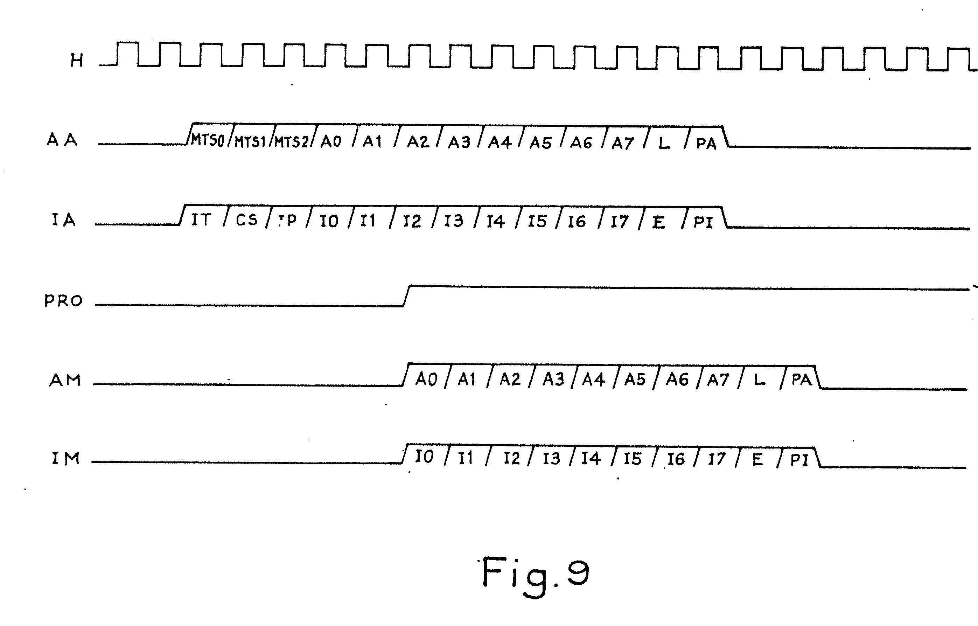

En nous référant à la figure 9 qui est un séquentiel des signaux, et en supposant que c'est l'unité centrale A qui a pris la main, la ligne supérieure représente l'horloge H qui est présente sur tous les séquentiels.

Le signal d'adresse AA appliqué sur le circuit 807 en sort avec un temps et demi de retard dû au fonctionnement synchrone du circuit de sélection et comprend successivement trois bits MTS 0 à MTS 2 qui donnent l'adresse de la MTS à laquelle seront envoyées les données en provenance de l'unité centrale et aiguillées par le MSL. Il comprend ensuite huit bits A0 à A7 qui doivent être transmis à la MTS sélectionnée pour y désigner l'adresse de la case mémoire à marquer. Il comprend ensuite un bit L qui est un ordre de lecture ou non dans la MTS sélectionnée et un bit PA qui donne la parité des neuf bits précédents.

Ce signal en sortie du circuit 807 est tout d'abord appliqué sur une mémoire d'adresse 811. Cette mémoire est chargée par les trois premiers bits MTS 0 à MTS 2 qui y restent jusqu'à la fin des échanges. Ces trois bits sont alors transmis en parallèle à un circuit de décodage 812 qui permet de décoder l'adresse de la MTS sélectionnée. Ce circuit de décodage émet donc alors sous la commande du séquentiel 804 un signal de prise sur l'une de ses huit sorties PR0 à PR7 reliées aux huit bornes correspondantes de sortie du MSL. L'intervention du séquentiel permet de retarder plus ou moins la sortie de ce signal de prise selon les besoins que l'on verra dans la suite du texte.

Le signal AA est aussi appliqué à un circuit de sélection 813, soit directement, soit par l'intermédiaire d'un registre à décalage 814 pour des raisons qui seront exposées par la suite. La sortie de ce circuit de sélection 813 est appliquée à un registre de sortie 815 qui délivre lui-même le signal de sortie AM à destination des huit MTS connectées au MSL.

Ce registre de sortie reçoit du séquentiel un signal de commande qui lui permet de bloquer le passage des trois bits MTS 0 à MTS 2 qui n'ont pas à être transmis à la MTS sélectionnée puisqu'ils servent justement à la sélectionner par l'intermédiaire du circuit de décodage 812.

Le registre 815 reçoit également le cas échéant un signal de blocage du circuit de gestion des fautes 810 ce qui lui permet d'interrompre les émissions en cas de faute. Ce signal est d'ailleurs appliqué également au circuit de décodage 812 pour le bloquer dans la même occasion.

Le registre à décalage 814 permet de retarder le signal AM en sortie de trois temps d'horloge. En effet la MTS peut rejeter les signaux d'entrée qui lui sont appliqués pendant sept temps d'horloge après le début du transfert. Pour éviter donc qu'elle ne prenne en compte des signaux reconnus erronés au niveau du MSL, on retarde les signaux de sortie de manière à ce que l'échange ne dure pas depuis plus de sept temps d'horloge lorsque le bit de parité PA est décodé dans le MSL. Si ce bit indique une erreur le signal de prise PR0 retombe et la MTS sélectionnée ne prend pas en compte les signaux qui lui sont envoyés et qui étaient erronés.

Les signaux qui sont donc transmis sont ceux indiqués sur la ligne AM de la figure 9.

Les signaux AA sont également appliqués à un circuit de contrôle de parité aller 816 qui calcule la parité sur les bits MTS 0 à L et compare le résultat de ce calcul au bit PA. Si le résultat n'est pas correct, il émet un signal de faute qui est appliqué au circuit de gestion de faute 810 lequel bloque alors le circuit de décodage 812 et le registre de sortie 815.

Le signal de donnée IA provenant de l'unité centrale et appliqué sur le circuit de sélection 808 débute en même temps que le signal AA. Il comprend tout d'abord un bit IT qui indique au MSL comme on le verra plus loin si celui-ci est en position intermédiaire ou terminale.

Il comprend ensuite un bit CS qui n'est pas utilisé pour le moment et qui est mis en réserve pour des versions ultérieures du MSL.

Il comprend ensuite un bit de parité IP qui est calculé sur les cinq bits MTS 0 à MTS 2, IT et CS.

Il comprend ensuite huit bits de donnée I0 à I7 qui sont destinés à être écrits dans la case mémoire de la MTS dont l'adresse est donnée par les huits bits A0 à A7.

Il se termine par un bit d'écriture E et par un bit PI de parité sur l'ensemble des bits IT à E.

En sortie du circuit 808 le signal IA est tout d'abord appliqué à une mémoire de contrôle 817 qui mémorise le premier bit IT et émet un signal qui en fonction de la valeur de ce bit indique si le MSL est en position intermédiaire ou terminale. Ce signal est appliqué pendant toute la durée d'échange sur le circuit de sélection 813 et un circuit de sélection 818 identique au circuit 813 et dont la fonction est la même.

Ce circuit 818 reçoit le signal IA d'une part directement et d'autre part par l'intermédiaire d'un registre à décalage 819 homologue du circuit 814 et dont la fonction est la même.

15

Le signal ainsi sélectionné par le circuit 818 est appliqué à un registre de sortie 820 homologue du circuit 815 et qui reçoit lui aussi le même signal du séquentiel 804 que le circuit 815 ce qui permet de supprimer les trois premiers bits du signal de donnée IA.

Le registre de sortie 820 reçoit également le cas échéant du circuit de faute 810 un signal de blocage qui bloque sa sortie. Il émet sur une borne de sortie du MSL le signal IM qui comporte en série les huit bits I0 à I7, le bit E et le bit PI.

Le signal en sortie du circuit 808 est enfin appliqué au circuit de contrôle de parité aller 816 qui permet de calculer les parités correspondant au bit IP et celle du bit PI. En cas de faute le circuit 816 envoie également un signal sur le circuit de gestion de faute 810 ce qui entraîne les mêmes conséquences qu'une faute de parité sur PA.

La MTS ainsi sélectionnée et ayant reçu les informations d'adresse et de donnée les traite et envoie généralement en retour un signal de contrôle destiné à l'unité centrale. Ce signal de contrôle est formé normalement du contenu de la case mémoire sélectionnée, soit qu'elle ait été lue sans inscription soit qu'elle ait été inscrite puis lue.

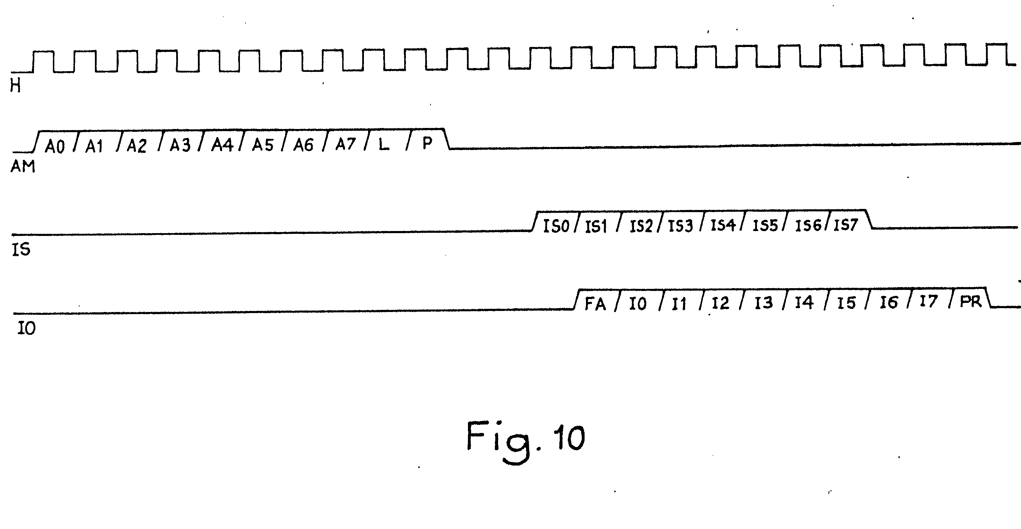

Ce signal de retour IS en provenance de la MTS est représenté sur la figure 10 sous le signal d'horloge H et le signal d'adresse AM. Il comprend les bits IS0 à IS7.

Il est appliqué tout d'abord à un registre d'entrée 821 qui permet de le retarder d'un temps d'horloge afin de pouvoir placer en tête de ce signal un bit FA qui indique le cas échéant une faute de parité aller ou une retombée du signal de prise. Pour cela la sortie du circuit de gestion de faute 810 est appliquée à un circuit "OU" 822 qui reçoit également la sortie du registre 821. Le signal IS est aussi appliqué à un générateur de parité retour 823 qui calcule la parité sur les bits IS0 à IS7 et délivre un bit PR qui suit immédiatement le bit I7. La sortie de ce générateur 823 est appliquée elle aussi au circuit "OU" 822 de manière à placer ce bit de parité retour après les bits de donnée retour.

Le signal en sortie du circuit "OU" est alors appliqué à un registre de sortie 824 qui retarde l'ensemble du signal ainsi constitué de une durée d'horloge en raison de son fonctionnement synchrone et possède deux sorties distinctes sur lesquelles apparaissent les signaux IOA et IOB. Selon que l'une ou l'autre des unités centrales reliées au MSL a appelé, le signal de retour est envoyé sur l'une ou l'autre des deux sorties correspondant à ces deux signaux.

Un MSL unique commandé directement par une unité centrale ne permet d'adresser directement que huit MTS.

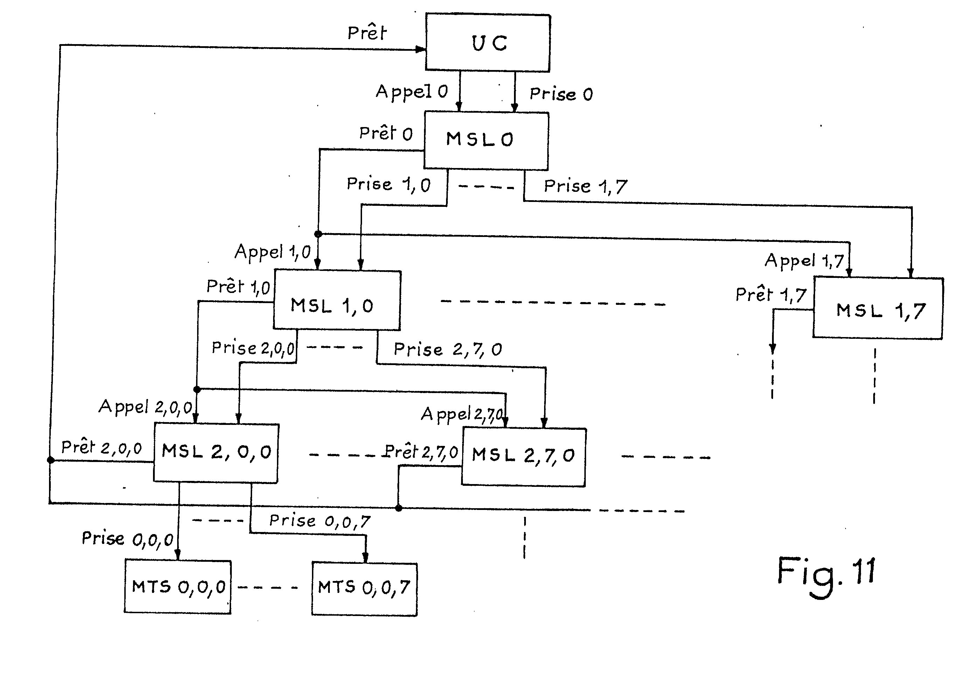

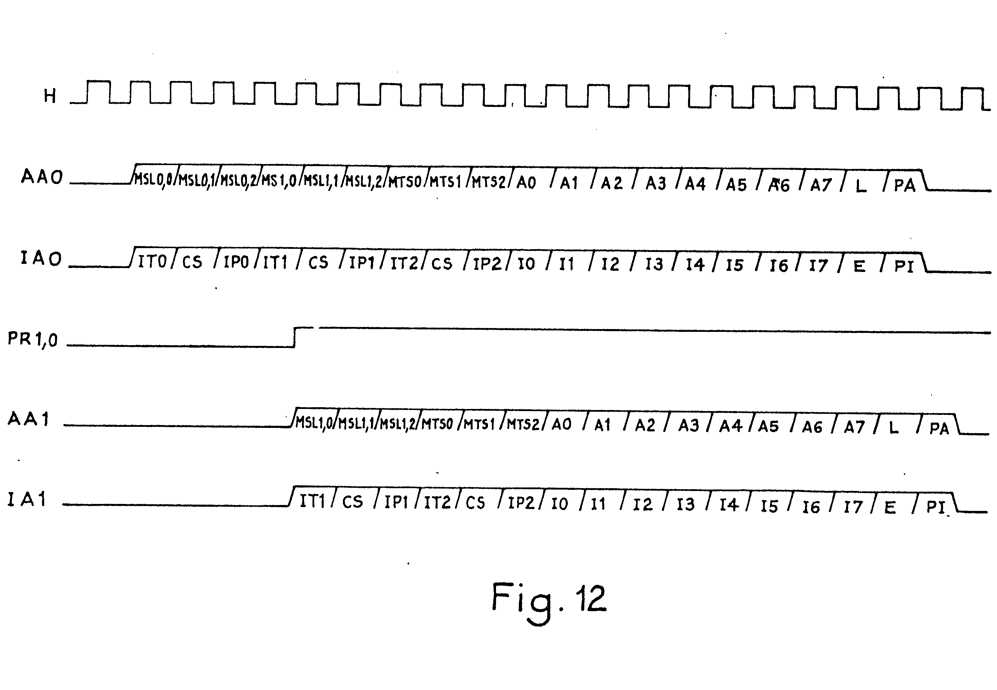

Pour augmenter cette capacité il faut en associer plusieurs pour démultiplier les possibilités de démultiplication. Le MSL permet justement cette possibilité d'association selon divers schémas. L'un de ces schémas est présenté sur la figure 11 qui est limitée pour des raisons de clarté d'une part à une seule unité centrale alors qu'il y en a toujours deux, ensuite à une seule branche de l'arbre ainsi obtenue, et enfin aux seules liaisons correspondant aux signaux appel-prêt. En effet une fois que le système appel-prêt aura sélectionné la branche voulue, les autres signaux se cascaderont dans le sens unité centrale vers MTS pour les informations de marquage, et dans le sens inverse pour les informations de retour.

L'unité centrale UC émet donc un signal d'appel 0 vers le MSL 0 qui forme le premier étage de sélection.

Celle-ci répond par un signal prêt 0 qui est adressé en parallèle sur les huit MSL 1, 0 à 1, 7 qui forment le deuxième étage. Ce signal forme donc les huit signaux appel 1, 0 à appel 1, 7 destinés à ces huit MSL.

En réponse ceux-ci émettent respectivement les huit signaux prêt 1, 0 à prêt 1, 7.

Chacun de ces signaux prêt est alors émis en parallèle sur huit MSL du troisième étage de sélection. Ce troisième étage comprend donc 8 x 8 = 64 MSL dont les MSL 2, 0, 0 à 2, 7, 0 reliés au MSL 1, 0 du deuxième étage.

Pour celui-ci le signal prêt 1, 0 devient donc les signaux appel 2, 0, 0 à appel 2, 7, 0. En réponse à ces signaux d'appel tous les MSL du troisième étage répondent par des signaux prêt, dont les signaux prêt 2, 0, 0 à prêt 2, 7, 0 des MSL précédents.

Tous ces signaux prêt du troisième étage sont alors rassemblés en un "OU" câblé pour former le signal prêt de retour appliqué sur l'unité centrale.

En recevant ce signal prêt l'unité centrale sait que tous les MSL sont disponibles pour recevoir les signaux de prise. Elle envoie donc un signal prise 0 au MSL 0 puis les informations d'adresse et de donnée respectivement AA0 et IAO qui sont représentées sur le séquentiel de la figure 11 sous le signal d'horloge H.

Par rapport aux informations d'adresse et de donnée destinées à une sélection par un MSL unique, celles-ci comprennent les informations supplémentaires composées de trois bits par étage supplémentaire pour chaque signal d'adresse et de donnée.

C'est ainsi que le signal AA0 comprend avant les trois bits d'adresse du MTS final MTS 0 à MTS 2 successivement trois bits d'adresse du MSL du deuxième étage MSL 0, 0 à MSL 0, 2, puis trois bits d'adresse du MSL du deuxième étage, MSL 1, 0 à MSL 1, 2.

Comme il est aussi nécessaire d'indiquer aux MSL des étages intermédiaires qu'ils sont effectivement en position intermédiaire, et de mettre un bit de parité et un bit de remplissage pour respecter l'égalité des formats entre les bits d'adresse et les bits de donnée, le signal IA0 comprend avant les trois bits IT2, CS, et IP2 destinés au MSL du dernier étage, successivement trois bits IT0, CS, IP0, destinés au MSL 0 et trois bits IT1, CS, IP1, destinés au MSL sélectionné par le précédent dans l'étage intermédiaire.

Donc les trois premiers bits du signal AA0 sont décodés dans le MSL 0 ce qui donne l'adresse du MSL sélectionné dans le deuxième étage, soit par exemple le MSL 1, 0.

Le MSL 0 émet alors un signal de prise I, 0 sur la borne de sortie correspondante qui est reliée à la borne d'entrée de prise du MSL 1, 0 lequel peut alors recevoir les informations qui lui sont transmises du MSL 0, alors que les sept autres MSL du deuxième étage auxquels sont appliquées ces informations en parallèle avec MSL 1, 0 ne peuvent pas les prendre en compte puisqu'ils ne reçoivent pas de signal de prise.

Le MSL 0 décode dans sa mémoire de contrôle le bit IT0 qui lui indique qu'il est placé en position intermédiaire. Ceci a pour effet de placer les circuits de sélection 813 et 818 de manière à ce que les registres à décalage 814 et 819 ne soient pas utilisés et que les signaux aillent directement sur les registres de sortie 815 et 820. En effet le circuit suivant étant un MSL il n'est pas utile de retarder les signaux de manière à ce qu'ils ne soient pas pris en compte dans le cas de la détection d'une erreur dans le MSL.

Par contre les trois bits d'adresse du début du signal AA0 et les trois bits de commande du début du signal IA0 ne sont plus utiles. Comme rien ne les distingue, sinon leur emplacement en début du message, il est même impératif de ne pas les transmettre. Pour cela le signal intermédiaire/terminal décodé dans la mémoire de contrôle 817 est appliqué au séquentiel 804 ce qui commande le retard par l'intermédiaire du décodeur 812 de la sortie du signal de prise PR, 0. Ce retard est de quatre temps d'horloge, trois pour faire disparaître les trois premiers bits de chaque signal d'information et un pour tenir compte du retard synchrone dû au registre de sortie. En même temps le signal provenant du séquentiel et qui est appliqué aux registres de sortie bloque ces derniers pour assurer une sécurité de transmission.

Ainsi les signaux en sortie du MSL 0 deviennent à ce moment là les signaux AA1 et IA1.

Dans le deuxième étage, par exemple dans le MSL 1, 0, on opère le même traitement pour sélectionner l'un des MSL du dernier étage et éliminer de l'en-tête des signaux d'information les trois premiers bits correspondant à ce dernier MSL. Ainsi donc le signal qui parviendra sur celui-ci sera identique à celui qui parvient sur un MSL unique et tel que représenté sur le séquentiel de la figure 9.

Pour les signaux de retour, le MSL directement branché sur la MTS effectue les calculs de parité retour et l'addition du contrôle de parité aller. Les autres MSL de la branche de retour sont totalement transparents au signal de retour. Pour cela le signal intermédiaire/terminal provenant de la mémoire de contrôle 817 est appliqué au circuit de contrôle de parité qui contrôle IP et inhibe PI. Par ailleurs ce même signal intermédiaire sur terminal est appliqué au générateur de parité retour 823 qu'il inhibe ce qui fait que le signal de retour traverse de manière parfaitement transparente les registres 821 et 824 où il subit simplement un retard. Ces circuits de retour sont bien évidemment connectés selon un "OU" câblé puisque l'on remonte la pyramide vers l'unité centrale par l'intermédiaire des MSL.

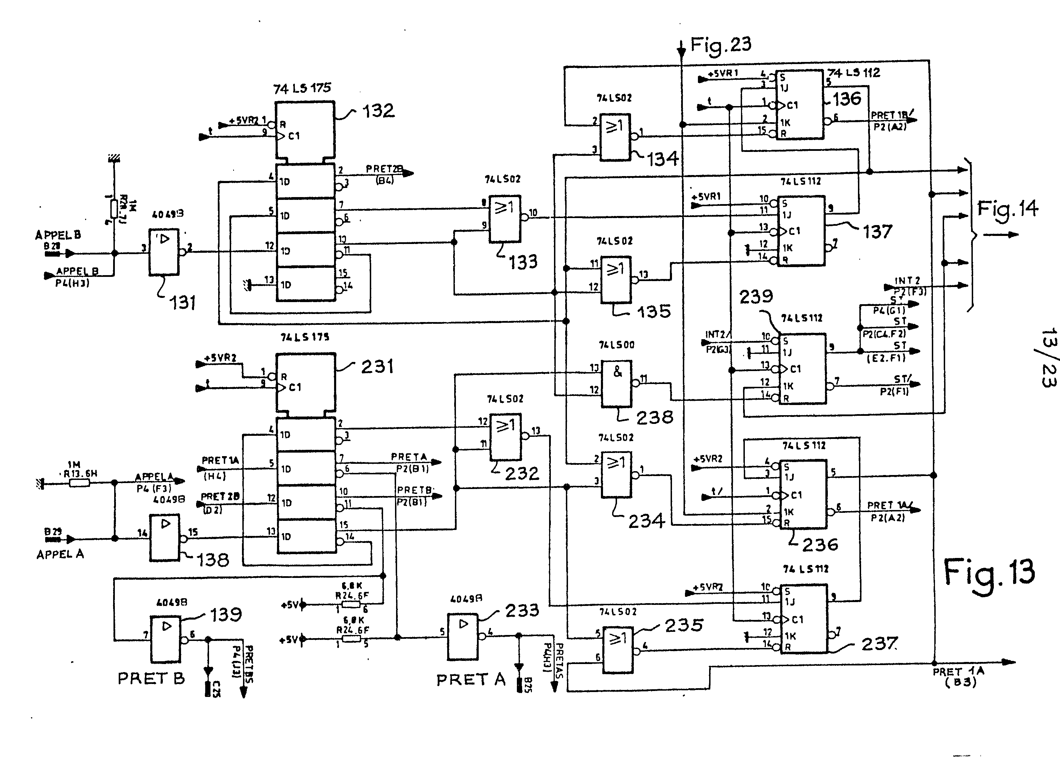

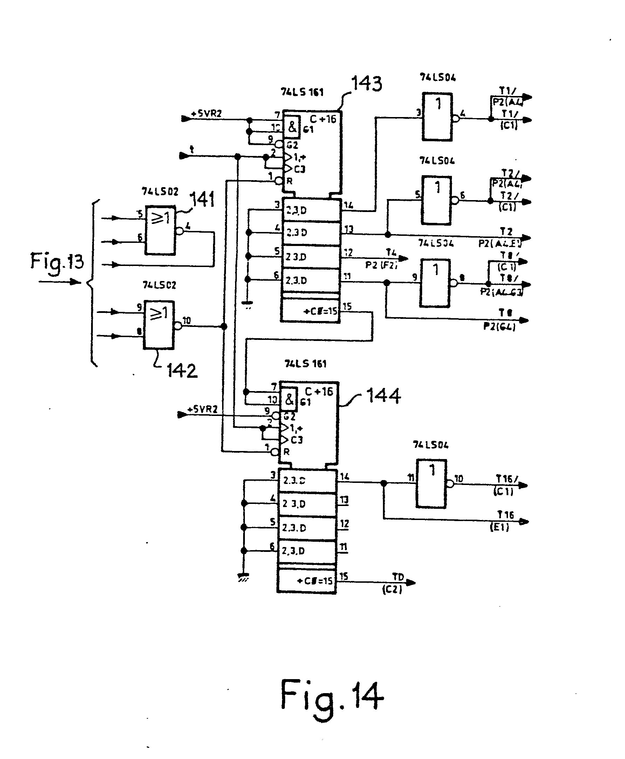

Comme on l'a vu plus haut un MSL est réalisé sous la forme d'un circuit intégré à 28 bornes. Ce circuit intégré est obtenu par intégration des fonctions représentées sur le synoptique de la figure 8 et une étape intermédiaire à cette intégration consiste à réaliser une carte de circuit imprimé ayant pour l'extérieur exactement le même fonctionnement qu'un MSL mais réalisée à partir de circuits intégrés discrets. Le schéma de cette carte de circuit intégré est représenté sur les figures 13 à 23 prises ensemble, selon des conventions tout àfait standards en matière de circuits intégrés discrets. On donnera donc dans la suite de ce texte simplement la correspondance entre ces circuits intégrés discrets et les blocs du synoptique de la figure 8, la simple réalisation de cette carte donnant directement un circuit fonctionnant de la manière décrite précédemment dans le texte.

Le registre d'appel 801 est composé des circuits 131 à 137, le registre d'appel 802 est composé des circuits 138 à 237, et la logique d'exclusion 803 des circuits 238 et 239 de la figure 13.

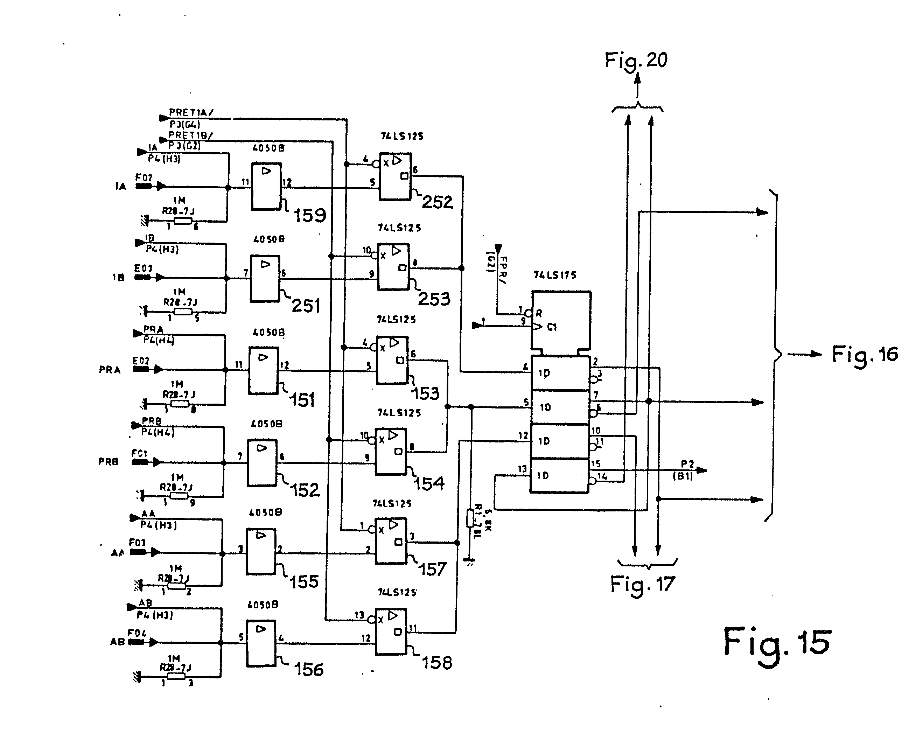

Le séquentiel 804 est quant à lui formé des circuits représentés sur la figure 14 parmi lesquels les circuits 141 et 142 servent à l'initialisation et les circuits 143 et 144 au décompte des temps nécessaires.

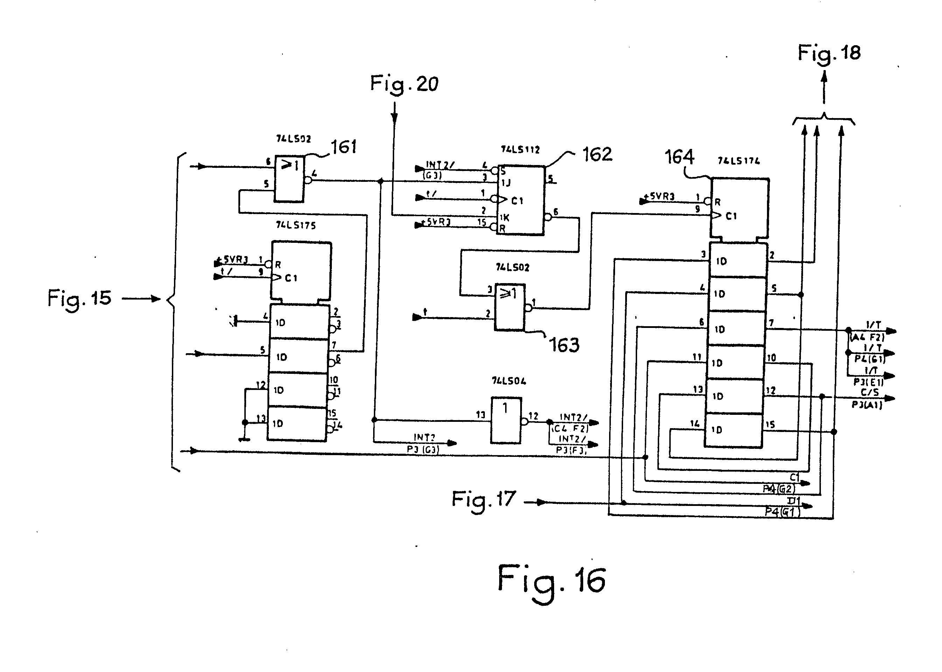

Les circuits de sélection d'entrée des signaux de prise et d'information 806 à 808 sont représentés sur la figure 15. Les circuits intégrés 151 à 154 forment le circuit 806, les circuits intégrés 155 à 158 forment le circuit 807 et les circuits 159, 251 à 253 forment le circuit 808. Le circuit intégré 254 permet de rassembler les signaux en sortie et de les délivrer en synchrone avec un temps de retard.

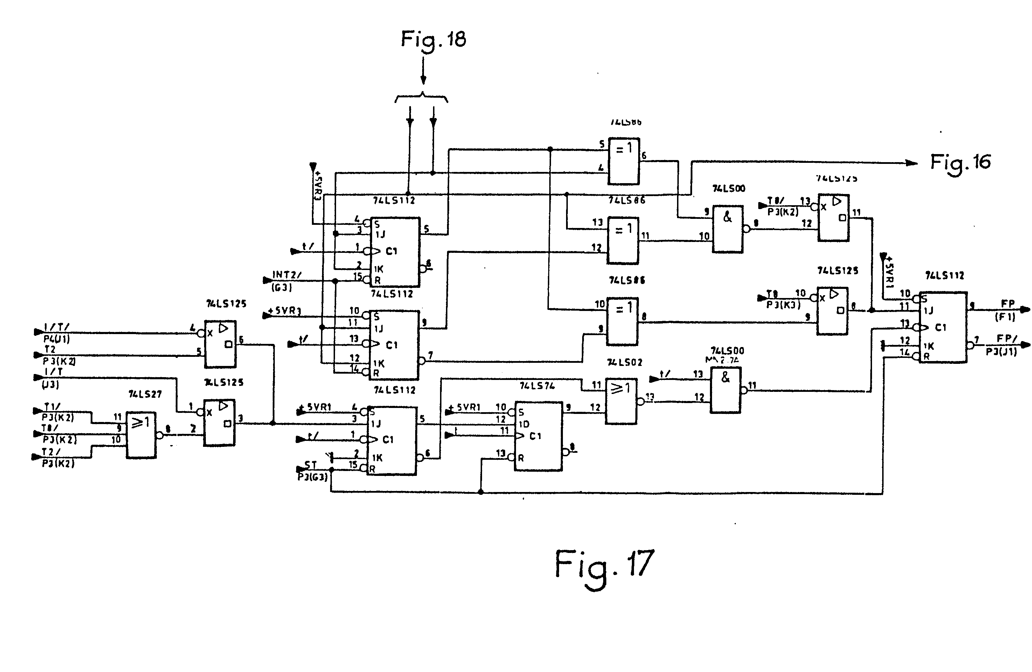

Les mémoires d'adresse 811 et de contrôle 817 sont représentés sur la figure 16 dans laquelle le registre 164 permet cette mémorisation sous la commande d'une horloge de réception formée par les circuits 161 à 163.

La figure 17 représente le schéma du circuit de contrôle des parités aller 816.

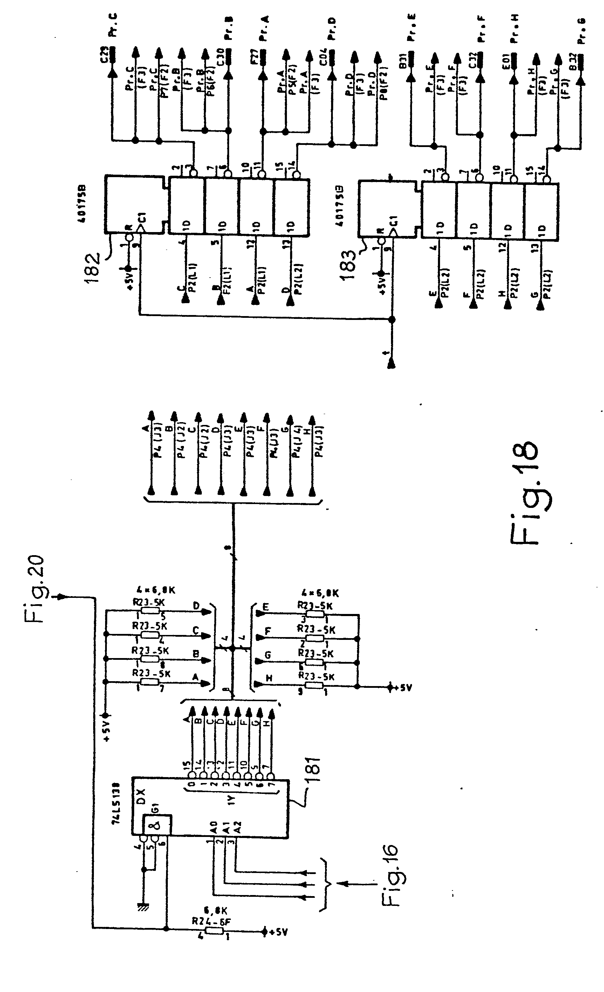

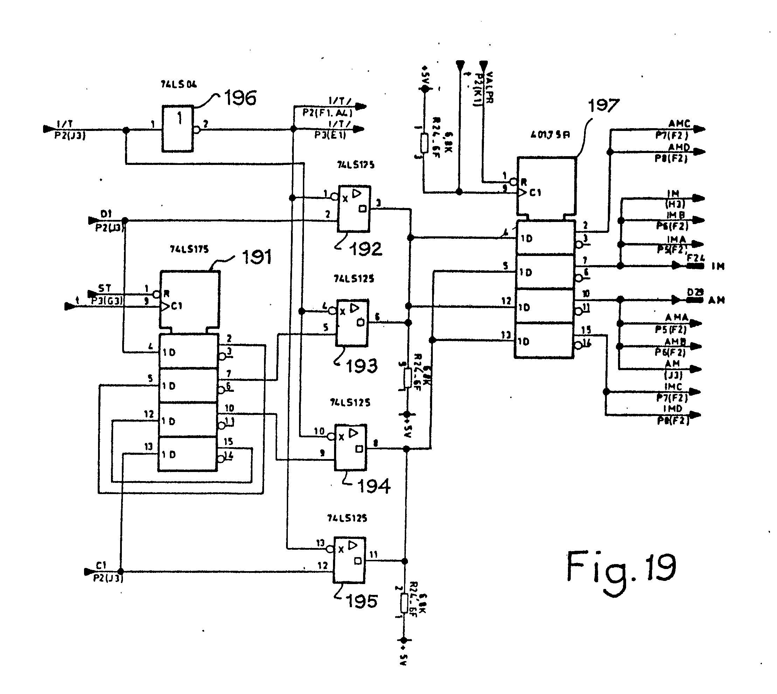

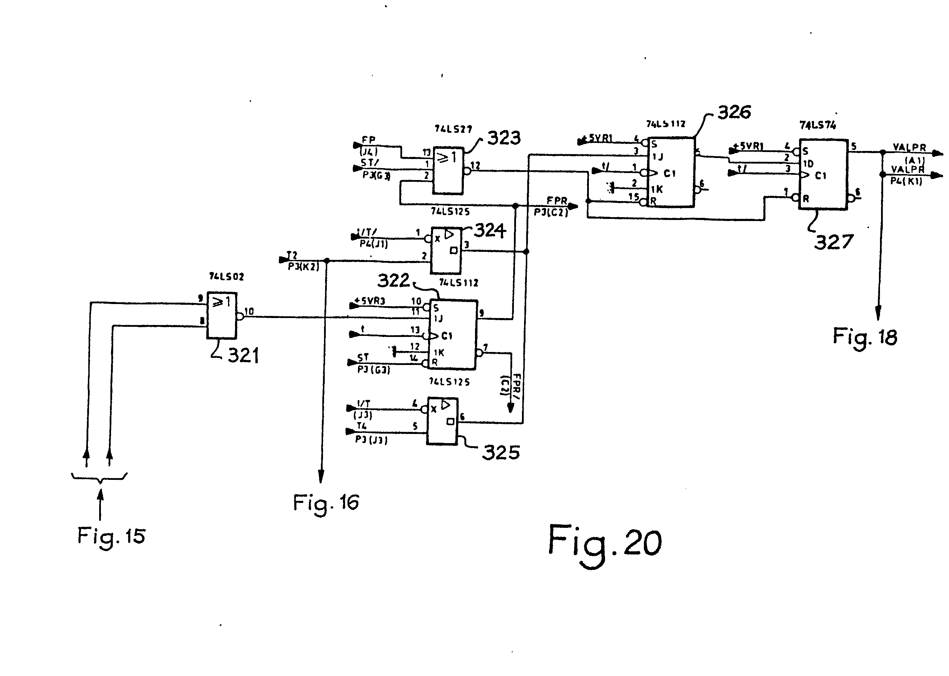

Le circuit de décodage et d'émission des signaux de prise en sortie du MSL est représenté sur la figure 18 dans laquelle le circuit intégré 181 est le décodeur qui décode les informations provenant du circuit intégré 164 de la figure 16, et les circuits intégrés 182 et 183 permettent · l'émission et le blocage sous l'action des signaux provenant du séquentiel.

Le circuit représenté sur la figure 19 regroupe à la fois les registres à décalage 814 et 819, les dispositifs de sélection 813 et 818 et les registres de sortie 815 et 820. Pour cela les signaux d'information passent soit par les circuits intégrés 192 et 194, soit par les circuits intégrés 193 et 194 et dans ce dernier cas en ayant subi un retard dans le circuit intégré 191. La commande du passage direct ou retardé se fait par l'intermédiaire du bit IT lui-même appliqué sur les circuits d'aiguillage soit directement soit par l'intermédiaire du circuit 196. Le registre de sortie 197 regroupe les deux registres de sortie 815 et 820.

Sur la figure 20 le circuit 809 de contrôle de faute de prise est réalisé par les circuits intégrés 321 et 322. Le circuit de gestion des fautes 810 comprend lui-même les circuits intégrés 323 à 327.

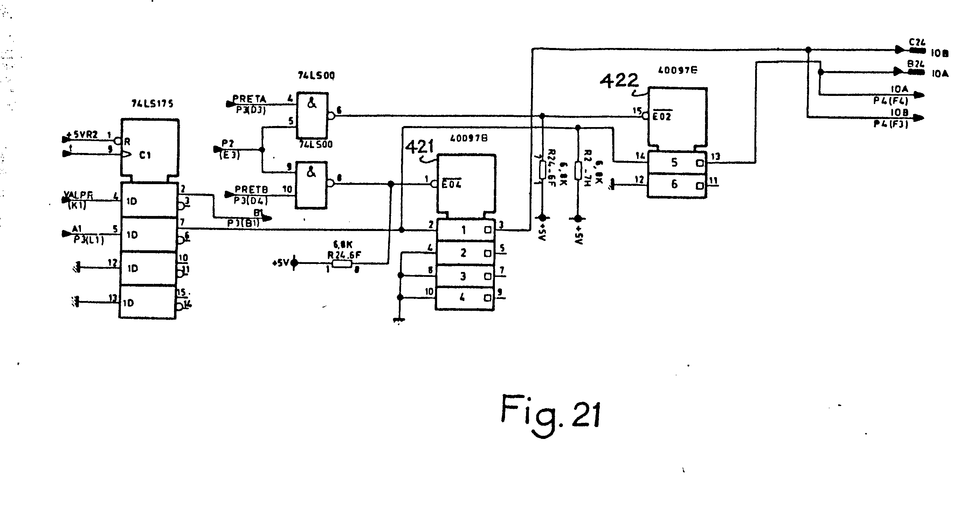

Le schéma du registre de sortie 824 d'émission des signaux de retour vers l'unité centrale est représenté sur la figure 21. Les circuits intégrés 421 et 422 permettent d'émettre le message de retour soit vers l'unité centrale A soit vers l'unité centrale B.

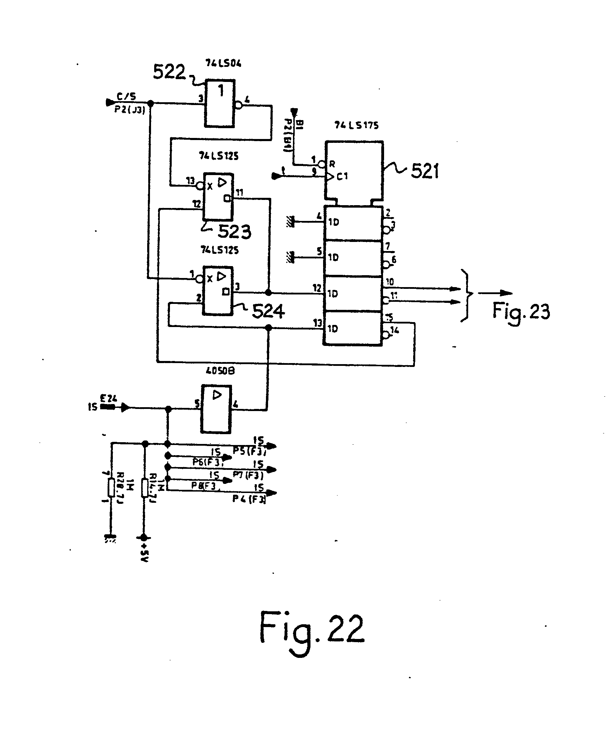

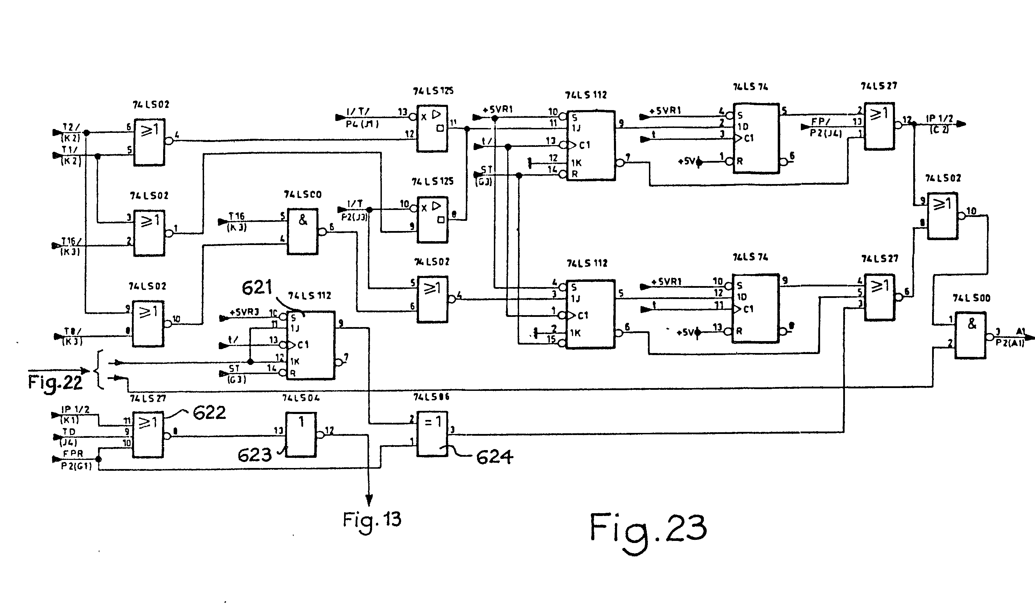

Le schéma du registre d'entrée des signaux de retour en provenance de la MTS est représenté sur la figure 22. Sur cette figure le circuit intégré 521 forme le registre proprement dit tandis que les circuits intégrés 522 à 524 permettent en faisant un rebouclage supplémentaire par l'intermédiaire du circuit 521 d'ajouter un retard de un temps d'horloge supplémentaire sur le signal de retour sous la commande du bit d'information CS dans le cas où l'on utilise celui-ci, ce qui est toujours possible puisqu'il existe dans le format et que pour une autre application l'unité centrale de commande peut parfaitement le positionner de manière à le rendre actif.

Le générateur de parité retour 823 est formé des circuits intégrés 621 à 624 représentés sur la figure 23. Les autres circuits intégrés de la figure 23 permettent de constituer le circuit de sommation 822 dans lequel sont ajoutés tant le signal de retour IS que les informations de parité retour générées par le circuit 823, et le signal de contrôle de parité aller provenant du circuit 816.

Les procédés classiques de l'intégration à grande échelle permettent d'intégrer de manière connue par l'homme de l'art l'ensemble de circuits ainsi détaillés sur les figures 13 à 23 sur une seule puce de circuit intégré à grande échelle.

## REVENDICATIONS

1. Module de sélection logique destiné à transmettre des signaux aller provenant d'un dispositif amont parmi deux, à un dispositif aval parmi huit, caractérisé en ce qu'il comprend :

- des moyens (801, 802) pour recevoir les signaux d'appel des dispositifs amont, détecter le premier appel, et émettre un signal prêt vers le premier dispositif amont appelant ;

- des moyens (806-808) pour recevoir les signaux de prise, d'adresse, et de donnée entrant émis par les dispositifs amont, et sélectionner sous la commande du signal prêt les signaux émis par le premier dispositif amont appelant ;

- des moyens (811, 812) pour décoder dans le signal d'adresse l'adresse du dispositif aval devant recevoir les signaux à transmettre, mémoriser cette adresse pendant la durée de la transmission, et émettre vers le dispositif aval ainsi sélectionné un signal de prise sortant ; et

- des moyens (815, 820) pour supprimer dans les signaux d'adresse et de donnée entrant les informations utilisées par le module de sélection logique, et transmettre au dispositif aval sélectionné par le signal de prise sortant le reste des signaux d'adresse et de donnée.

2. Module selon la revendication 1, caractérisé en ce qu'il comprend en outre des moyens (821-823) pour recevoir un signal de retour émis par le dispositif aval en réponse aux informations reçues du module, et des moyens (824) pour émettre, sous la commande du signal prêt, le signal de retour vers celui des dispositifs amont qui a émis les signaux aller.

3. Module selon l'une quelconque des revendications 1 et 2, caractérisé en ce qu'il comprend en outre des moyens (805) pour surveiller la durée de fonctionnement du module à partir de la réception de l'appel de l'un des dispositifs amont et pour basculer le module en réception des signaux de l'autre dispositif amont lorsque cette durée dépasse une valeur déterminée.

4. Module selon l'une quelconque des revendications 1 à 3, caractérisé en ce qu'il comprend en outre des moyens (817) pour décoder dans l'en-tête du signal de donnée reçu du dispositif amont un signal indiquant au module la nature du dispositif aval auquel il est relié, et des moyens (813, 814, 818, 819) pour apporter un retard déterminé par la valeur du signal ainsi décodé, aux signaux d'adresse et de donnée transmis vers le dispositif aval sélectionné.

5. Module selon l'une quelconque des revendications 1 à 4, caractérisé en ce qu'il comprend en outre des moyens (809, 810) pour surveiller le signal de prise reçu du dispositif amont et interrompre l'émission des signaux de prise, d'adresse, et de donnée sortant lorsque le signal de prise reçu du dispositif amont disparaît.

6. Module selon l'une quelconque des revendications 1 à 5, caractérisé en ce qu'il comprend en outre des moyens (816) pour contrôler la parité des signaux reçus et interrompre la transmission en cas de faute de parité.

7. Module selon l'une quelconque des revendications 2 à 6, caractérisé en ce que les moyens de réception des signaux retour comprennent des moyens (823) pour générer un signal de parité de retour, et des moyens (822) pour ajouter au signal de retour ce signal de contrôle de parité de retour et le signal de contrôle de parité aller.

8. Module selon l'une quelconque des revendications 1 à 7, caractérisé en ce qu'il est réalisé sous la forme d'un circuit intégré à intégration à grande échelle comportant vingt-huit bornes consistant en deux bornes d'alimentation, une borne d'entrée d'horloge, deux bornes d'entrée d'appel, deux bornes d'entrée de validation d'appel, deux bornes de sortie prêt, deux bornes d'entrée de prise, deux bornes d'entrée d'adresse, deux bornes d'entrée de donnée, huit bornes de sortie de prise, une borne de sortie d'adresse, une borne de sortie de donnée, une borne d'entrée d'information de retour, et deux bornes de sortie d'information de retour.

Fig.1

0061957

Fig.2

Fig.3

301 Demande UCA ?

302 Demande UCB ?

303

305 Envoi Signal Prêt a UCA

306 Chargement Compteur Surveillance échange

307 Réception prise ?

308 Durée ⩾ 125 µs

310 Chargement CP surveillance et validation séquence réception

304 Même séquence que 303

311 Retombée de Prise ou Appel ou Faute

312 Échange ⩾ 125 µs

309 RZ Prêt UCA et signalisation sur info retour (si faute)

Fig.4

Fig.5

0061957

T

Appel A

Prêt A

Prise A

Appel B

Prêt B

Prise B

Fig.6

6/23

0061957

Fig.7

PRISE A
PRISE B
INFO { A / B }
AD { A / B }

Réception Sélection A/B  702

PRISE
INFO
AD

PRÊT A

APPEL A
APPEL B

SYSTÈME APPEL _ PRÊT  101

PRÊT A
PRÊT B

PRÊT B

FAUTE

PRÊT A
PRISE
701

SÉQUENTIEL ÉCHANGE  106

Détection Retombée PRISE  703

CONTRÔLE PARITÉ  704

'705
FAUTE

MÉMORISATION adresse-MTS  706

DÉCODAGE  707

PRO  8

Sélection Inter/Terminal  708

RETARD POUR  711
MSL TERMINAL

709

710

FAUTE  Commande Émission  713

ÉMISSION  712

PRO  8

AM

IM

CALCUL PARITÉ  715

714  FAUTE  ISMTS

PRISE x PRÊT A  PRÊT B x PRISE

IO A
IO B

ÉMISSION vers UC  716

7/23

0061957

Fig.8

Fig.9

Fig. 10

Fig. 11

H ⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔

AAO ‾\_/MSL0,0/MSL0,1/MSL0,2/MS1,0/MSL1,1/MSL1,2/MTS0/MTS1/MTS2/A0/A1/A2/A3/A4/A5/A6/A7/L/PA\_

IAO ‾\_/IT0/CS/IP0/IT1/CS/IP1/IT2/CS/IP2/I0/I1/I2/I3/I4/I5/I6/I7/E/PI\_

PR1,0 _____/‾‾‾‾‾‾‾‾‾‾‾‾‾‾‾‾‾‾‾

AA1 ‾\_/MSL1,0/MSL1,1/MSL1,2/MTS0/MTS1/MTS2/A0/A1/A2/A3/A4/A5/A6/A7/L/PA\_

IA1 ‾\_/IT1/CS/IP1/IT2/CS/IP2/I0/I1/I2/I3/I4/I5/I6/I7/E/PI\_

Fig. 12

0061957

Fig.13

13/23

0061957

Fig.14

Fig. 15

Fig. 16

Fig. 17

Fig.20

Fig.16

Fig.18

18/23

0061957

Fig.19

Fig. 20

00061957

Fig. 21

Fig.22

Fig.23

23/23

0061957

Office européen
des brevets

**RAPPORT DE RECHERCHE EUROPEENNE**

EP 82 40 0473

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| A | <u>DE - A - 2 740 713</u> (LE MATERIEL TELEPHONIQUE)<br><br>* page 7, ligne 12 - page 8, ligne 12 *<br><br>-- | 1,2 | H 04 Q 3/54<br>H 04 Q 11/04 |
| A | <u>FR - A - 2 308 258</u> (SOC. ITAL. TELECOM. SIEMENS)<br><br>* page 3, lignes 22-28; page 8, lignes 19-34 *<br><br>-- | 1,2,6, 7 | |
| A | INTERNATIONAL SWITCHING SYMPOSIUM, 7-11 mai 1979, Comité du C.I.C. PARIS (FR)<br>S.M. SCHREINER et al.: "Use of microprocessors in large digital switching systems", pages 737-744.<br><br>* paragraphe 5.4 *<br><br>-- | 1,2 | |
| A | TELECOMMUNICATION AND RADIO ENGINEERING, vol. 29/30, no. 2, février 1975,<br>WASHINGTON (US)<br>M. KH. GONCHAROK et al.: "Parameters of the Connecting Networks Between a Special-Purpose Control Computer (SPCC) and Telephone Equipment", pages 28-33.<br><br>* pages 29, lignes 38-44; figure 2 * | 1,2 | |

**DOMAINES TECHNIQUES RECHERCHES (Int. Cl. ³)**

H 04 Q 3/54
H 04 Q 11/04

Le présent rapport de recherche a été établi pour toutes les revendications

| Lieu de la recherche | Date d'achèvement de la recherche | Examinateur |
|---|---|---|
| La Haye | 01-07-1982 | MIKKELSEN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cite dans la demande
L : cité pour d'autres raisons

& : membre de la même famille. document correspondant

OEB Form 1503. 03.82

Office européen
des brevets

**RAPPORT DE RECHERCHE EUROPEENNE**

| | **DOCUMENTS CONSIDERES COMME PERTINENTS** | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| A | REVIEW OF THE ELECTRICAL COMMUNICA-TION LABORATORIES, vol. 27, no. 9/10, 9 octobre 1979, TOKYO (JP) Y. KANEKO et al.: "Signaling Equipment for Digital Switching System", pages 740-757. <br><br> * figure 2 * <br><br> -- | 1,2 | |
| A | INTERNATIONAL SWITCHING SYMPOSIUM, 7-11 mai 1979, Comité du C.I.C. PARIS (FR) J.P. LAGER et al.: "Fault detection and processing in the MT time divi-sion system", pages 193-200. <br><br> * paragraphes 3.1-3.2 * <br><br> -- | 1-3,5-7 | DOMAINES TECHNIQUES RECHERCHES (Int. Cl.³) |
| A | US - A - 3 786 197 (JACOBS et al.) <br><br> * abrégé; figures * <br><br> ------ | 1 | |

OEB Form 1503.2 06.78